Europäisches Patentamt

European Patent Office

Office européen des brevets

(19)

(11) Veröffentlichungsnummer: **0 124 698**
**B1**

(12) # EUROPÄISCHE PATENTSCHRIFT

(45) Veröffentlichungstag der Patentschrift:
**13.05.87**

(51) Int. Cl.⁴: **H 02 P 7/48,** H 02 P 1/38

(21) Anmeldenummer: **84102077.9**

(22) Anmeldetag: **28.02.84**

(54) **Drehzahlgeregelter Maschinenantrieb.**

(30) Priorität: **15.03.83 DE 3309230**

(43) Veröffentlichungstag der Anmeldung:
**14.11.84 Patentblatt 84/46**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**DE - B - 1 293 295**
**DE - B - 1 563 207**
**GB - A - 1 199 469**
**GB - A - 2 110 488**

(73) Patentinhaber: **Holec GmbH, Rheinstrasse 32,**
**D-6100 Darmstadt (DE)**

(72) Erfinder: **Fröhlich, Günter, Buchenstrasse 30,**
**D-5828 Ennepetal (DE)**

(74) Vertreter: **Zeitler, Giselher, Postfach 26 02 51,**
**D-8000 München 26 (DE)**

**Beschreibung**

Die Erfindung betrifft einen drehzahlgeregelten Maschinenantrieb gemäss dem Oberbegriff des Anspruchs 1.

Als drehzahlgeregelte Maschinenantriebe werden vielfach phasenanschnittgeregelte Asynchronmotoren verwendet, die beispielsweise im Fall eines vierpoligen Drehstrommotors eine Grunddrehzahl von 1400 U/min aufweisen. Derartige drehzahlgeregelte Maschinenantriebe haben jedoch den Nachteil, dass bei einem gewünschten Regelbereich von 1:50 unter Aufrechterhaltung eines geforderten Nenndrehmomentes die vom jeweiligen Asynchronmotor abgegebene Ausgangsleistung bei niedrigen Drehzahlen sehr stark abfällt, während gleichzeitig die innerhalb des Asynchronmotors auftretenden Energieverluste sehr stark ansteigen. Dies führt bei niedrigen Drehzahlen zu einem sehr schlechten Wirkungsgrad. Als noch nachteiliger erweist es sich, dass die hohen Energieverluste bei niedrigen Drehzahlen zu einer starken Erwärmung des betreffenden Asynchronmotors führen, so dass insbesondere im Dauerbetrieb bei niedrigen Drehzahlen aus thermischen Gründen der betreffende Asynchronmotor sehr stark überdimensioniert werden muss. Neben den dadurch sich ergebenden zusätzlichen Kosten führen das grössere Gewicht und Volumen eines derart überdimensionierten Antriebsmotors vielfach zu erheblichen Schwierigkeiten beim An- bzw. Einbau in bereits bestehende anzutreibende Maschinen.

Es ist zwar schon ein drehzahlgeregelter Maschinenantrieb der gattungsgemässen Art bekannt (DE-B-1 293 295), bei dem der Antrieb ein mit mehreren Wicklungen versehener polumschaltbarer Elektromotor ist, dessen Polumschaltung entsprechend der von ihm geforderten Drehzahl durchführbar ist. Hierbei bezieht sich der Maschinenantrieb insbesondere auf einen Waschmaschinenmotor, bei dem die Drehzahl für den Schleudergang 2800 U/min vom Motor, 2polig, beträgt und die Drehzahl für den Waschgang (325 U/min vom Motor, 16polig) mittels einer elektronischen Herabregelung der Arbeitsdrehzahl auf noch niedrigere Drehzahlen vorgesehen ist. Hierdurch soll die als schwierig angesehene Herstellung einer hochpoligen Wicklung vermieden werden. Gleichzeitig werden jedoch ebenfalls höhere thermische Verluste sowie eine erforderliche zusätzliche Steueranordnung in Kauf genommen.

Es ist weiterhin ein drehzahlgeregelter Maschinenantrieb bekannt (GB-A-1 199 469), bei dem eine Drehzahlregelschaltung für einen mit mehreren Wicklungen versehenen polumschaltbaren Elektromotor vorgesehen ist. Hierbei kann die Umschaltung von der einen Wicklung des Elektromotors auf die andere Motorwicklung in Abhängigkeit von der durch Betätigen eines Schalters geforderten Drehzahl durchgeführt werden. Dies bedeutet, dass gleichzeitig mit der Vorgabe eines neuen Drehzahlsollwertes die Polumschaltung vorgenommen wird, was jedoch den Nachteil erbringt, dass über den gesamten Drehzahlbereich hinweg kein gleichmässig hoher Wirkungsgrad erzielbar ist.

Der Erfindung liegt daher die Aufgabe zugrunde, den drehzahlgeregelten Maschinenantrieb der gattungsgemässen Art derart auszugestalten, dass der vorgesehene Induktionsmotor über einen sehr weiten Drehzahlbereich hinweg unter Beibehaltung eines vorgegebenen Nenndrehmomentes mit relativ geringen Energieverlusten betrieben werden kann, so dass ein relativ hoher Wirkungsgrad über den gesamten Drehzahlbereich hinweg erzielbar ist und gleichzeitig die durch die thermische Erwärmung des Motors sich ergebenden Verluste reduziert sind.

Diese Aufgabe wird durch die Merkmale des Anspruchs 1 gelöst.

Durch den erfindungsgemäss ausgestalteten drehzahlgeregelten Maschinenantrieb erfolgt die Umschaltung auf die verschiedenen Polzahlen abhängig vom Erreichen festgelegter Grenzwerte der gemessenen Motordrehzahl, und zwar derart, dass ein relativ hoher Wirkungsgrad über den gesamten Drehzahlbereich hinweg erzielt wird. Hierzu wird eine die Polumschaltung bewirkende Schützanordnung von einer mehrere gleich aufgebaute parallele Zweige aufweisenden Steuerschaltung angesteuert, die in der erfindungsgemäss angegebenen Weise speziell ausgestaltet ist.

Demgegenüber wird bei den eingangs geschilderten bekannten Ausgestaltungen gleichzeitig mit der Vorgabe eines neuen Drehzahlsollwertes die Polumschaltung vorgenommen. Dies bedeutet, dass die Polumschaltung nicht abhängig vom Wert der gemessenen Drehzahl erfolgt.

Es kann somit insgesamt bei gewünschten niedrigen Drehzahlen eine entsprechende Reduzierung der jeweiligen Nenndrehzahl des Elektromotors erreicht werden. Dies führt dazu, dass der polumschaltbare Elektromotor auch bei niedrigen Drehzahlen in der Nähe seiner Nenndrehzahl arbeitet und somit geringe Energieverluste aufweist. Dies wiederum führt zu der gewünschten Erhöhung des Umsetzungswirkungsgrades bei niedrigen Drehzahlen sowie zu der Verringerung der durch thermische Erwärmung sich ansonsten ergebenden Schwierigkeiten.

Vorteilhafte Weiterbildungen der Erfindung ergeben sich aus den Unteransprüchen.

Die Erfindung wird im folgenden in Form eines Ausführungsbeispiels anhand der Zeichnung näher erläutert. Es zeigen:

Fig. 1 eine schematische Ansicht des erfindungsgemässen drehzahlgeregelten Maschinenantriebs,

Fig. 2 ein Schaltdiagramm einer im Rahmen der Erfindung verwendbaren Steuerschaltung, und

Fig. 3 eine graphische Darstellung zur Erläuterung der Erfindung.

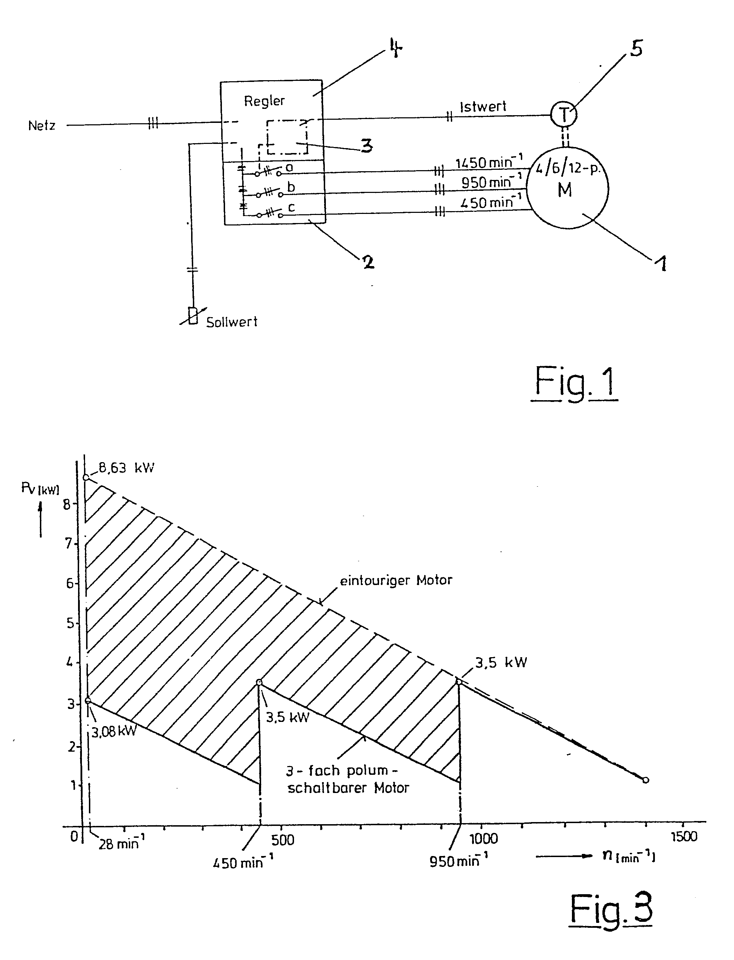

Gemäss Fig. 1 besteht der Maschinenantrieb im wesentlichen aus einem dreiphasigen Asynchronmotor 1, der durch Polumschaltung wahlweise in eine 4-, 6- oder 12polige Konfiguration gebracht werden kann, wodurch Nenndrehzahlen von 1450, 950 und 450 U/min erzielbar sind. Die Polumschaltung dieses Asynchronmotors 1 erfolgt durch eine Schützanordnung 2, deren einzelne die Polumschaltung durchführenden Schütze von einer Steuerschaltung 3 angesteuert werden. Diese Steuerschaltung 3 ist Teil eines Phasenschnittreglers 4, welcher mit Hilfe von Thyristoren bzw. Triac die Drehzahl des Asynchronmotors 1 in der gewünschten Weise beeinflusst. Dieser von einem dreiphasigen Netz gespeiste Phasenschnittregler 4 empfängt von einem schematisch angedeuteten Geber einen vorgegebenen Sollwert, während der dem Phasenschnittregler 4 zur Verfügung gestellte Istwert von einem Tachogenerator 5 abgeleitet ist, der von dem Asynchronmotor 1 unmittelbar angetrieben wird, was beispielsweise durch mechanische Verbindung der Wellen der beiden Einheiten 1 und 5 erfolgen kann.

Der Phasenschnittregler 4 arbeitet in an sich bekannter Weise derart, dass durch entsprechende zeitliche Ansteuerung der innerhalb desselben vorhandenen Thyristoren bzw. Triacs ein entsprechend reduzierter Durchschnittsstrom dem Asynchronmotor 1 zugeführt wird, so dass die von dem Asynchronmotor 1 abgegebene Drehzahl entsprechend dem von dem Tachogenerator 5 abgegebenen Istwert auf einen durch den Geber vorgegebenen Sollwert eingestellt wird. Die Teil des Phasenschnittreglers 4 bildende Steuerschaltung 3 ist hingegen derart aufgebaut, dass entsprechend dem vom Tachogenerator 5 jeweils abgegebenen Istwert die Schütze innerhalb der Schützanordnung 2 derart angesteuert werden, dass der Asynchronmotor 1 mit der jeweils günstigsten Polzahl betrieben wird, so dass in gewünschter Weise eine entsprechende Reduzierung der innerhalb des Asynchronmotors 1 auftretenden Energieverluste und damit eine entsprechende Erhöhung des Umsetzungswirkungsgrades zustandekommt.

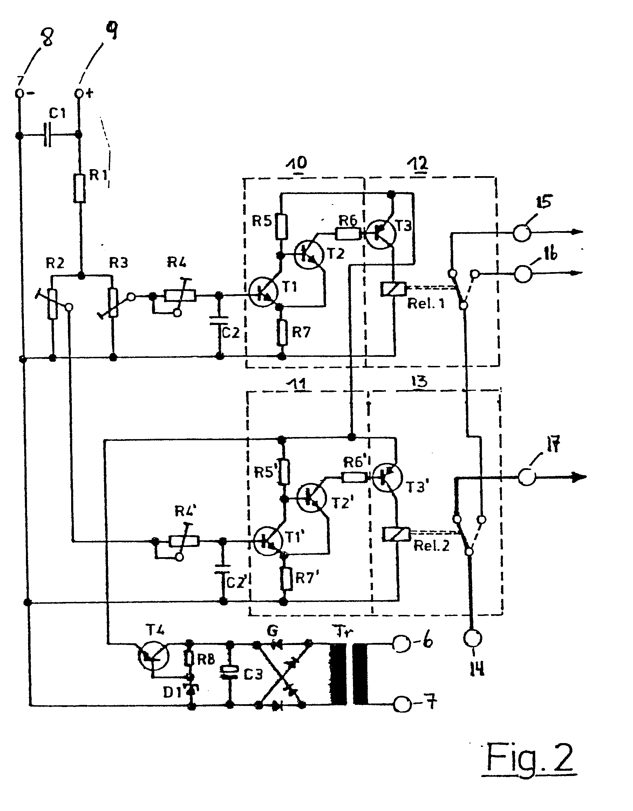

Fig. 2 zeigt ein Schaltbild einer Ausführungsform einer Steuerschaltung für den beschriebenen Maschinenantrieb. Diese Steuerschaltung besitzt eine über Speiseklemmen 6 und 7 gespeiste Stromversorgung, die aus einem Transformator Tr, einem Vollweg-Brückengleichrichter G, einem Glättungskondensator C3 und einem aus den Elementen R8, D1 und T4 bestehenden Stabilisierungskreis aufgebaut ist. Das Ausgangssignal des Tachogenerators 5 wird Eingangsklemmen 8 und 9 zugeführt, die zur Ableitung von Hochfrequenzkomponenten über einen Kondensator C1 verbunden sind. Der als Gleichspannungsgenerator ausgebildete Tachogenerator 5 ist derart ausgelegt, dass die von ihm abgegebene Ausgangsspannung linear mit der Drehzahl zunimmt und bei Erreichen der Nenndrehzahl von 1450 U/min beispielsweise einen Spannungswert von 145 V abgibt. Durch einen aus den Widerständen R1, R2 und R3 bestehenden Spannungsteiler werden dann zwei verschiedene Stromwerte gebildet, die über einstellbare Widerstände R4 bzw. R4' geleitet werden. Diese Widerstände R4 bzw. R4' dienen dazu, eine Schalthysteresis zu erreichen und dadurch ein unerwünschtes Flattern der Schütze der Schützanordnung 2 zu vermeiden. Ausgangsseitig der beiden einstellbaren Widerstände R4 bzw. R4' sind jeweils Kondensatoren C2 bzw. C2' vorgesehen, die eine weitere Hochfrequenzsperre ergeben. Die auf diese Weise gebildeten Ströme werden den Basen von Eingangstransistoren T1 bzw. T1' von zwei Schmitt-Trigger-Schaltungen 10 und 11 zugeführt, die aus Transistoren T1, T2 bzw. T1', T2' sowie Widerständen R5, R6, R7 bzw. R5', R6', R7' aufgebaut sind. Diese Schmitt-Trigger-Schaltungen 10 bzw. 11 sind derart aufgebaut, dass sie bei Zufuhr eines Eingangsstroms $I_B$ von 10 µA zum Ansprechen gelangen, was aufgrund der Einstellung der Widerstände R2 und R3 des Spannungsteilers $R_1$-$R_3$ dann der Fall ist, wenn an den Klemmen 8, 9 eine vom Tachogenerator 5 abgegebene Spannung von 45,9 bzw. 96,9 V anliegt. Ausgangsseitig der beiden Schmitt-Trigger-Schaltungen 10, 11 sind jeweils eine Verstärker- und Relaisschaltung 12 bzw. 13 vorgesehen, die aus jeweils einem Transistor T3 bzw. T3' und einem von demselben gesteuerten Relais Rel.1 bzw. Rel.2 bestehen. Diese Relais Rel.1 bzw. Rel.2 besitzen jeweils Umschaltkontakte, die in Fig. 2 in ihrer Arbeitsstellung gezeigt sind. Mit Hilfe dieser Umschaltkontakte der Relais Rel.1 bzw. Rel.2 kann erreicht werden, dass die einer Eingangsklemme 14 zugeführte Netzspannung wahlweise einer von drei Ausgangsklemmen 15 bis 17 zugeführt wird, von denen aus eine Ansteuerung der drei Schütze der Schützanordnung 2 erfolgt.

Die Funktionsweise der in Fig. 2 gezeigten Anordnung ist wie folgt: Solange der Tachogenerator 5 eine Spannung zwischen 0 und 45,9 V abgibt, werden den beiden Schmitt-Trigger-Schaltungen 10 bzw. 11 Eingangsströme $I_B$ von weniger als 10 µA zugeführt. Dies hat zur Folge, dass die beiden Relais Rel.1 und Rel.2 zum Ansprechen gelangen, wobei die Umschaltkontakte dieser Relais Rel.1 und Rel.2 die in Fig. 2 dargestellten Arbeitsstellungen einnehmen. Dies führt dazu, dass die der Eingangsklemme 14 zugeführte Netzspannung an die Ausgangsklemme 17 gelangt. Dadurch gelangt der einen 12poligen Betrieb des Asynchronmotors 1 bewirkende Motorschütz der Schützanordnung 2 zum Ansprechen, so dass nunmehr der Asynchronmotor 1 in der 12poligen Konfiguration betrieben wird.

Wenn danach die vom Tachogenerator 5 abgegebene Ausgangsspannung über den Wert von 45,9 V ansteigt, erhält die Schmitt-Trigger-Schaltung 11 einen Eingangsstrom $I_B$ grösser als 10 µA. Dies hat zur Folge, dass nunmehr das Relais Rel.2 abschaltet, so dass der betreffende Umschaltkontakt in seine Ruhestellung gelangt, während das Relais Rel.1 der Verstärker- und Relaisschaltung 12 weiterhin angezogen ist. Dies führt dann dazu, dass die der Eingangsklemme 14 zugeführte Netzspannung über die beiden Umschaltkontakte der Relais Rel.1 und Rel.2 der Ausgangsklemme 15 zugeführt wird, so dass nunmehr der Motorschütz für den 6poligen Betrieb des Asynchronmotors 1 anspricht, während der mit der Ausgangsklemme 17 verbundene Motorschütz stromlos wird. Der Asynchronmotor 1 wird demzufolge nunmehr innerhalb eines Drehzahlbereiches zwischen 450 und 950 U/min in seiner 6poligen Konfiguration betrieben.

Wenn schliesslich die vom Tachogenerator 5 abgegebene Ausgangsspannung den Wert von 96,9 V übersteigt, erhält die Schmitt-Trigger-Schaltung 10 ebenfalls einen Eingangsstrom $I_B$ von mehr als 10 µA, so dass nun auch diese Schmitt-Trigger-Schaltung 10 zum Ansprechen gelangt. Dies führt dazu, dass das Relais Rel.1 ebenfalls stromlos wird und der betreffende Umschaltkontakt in seine Ruhestellung bewegt wird. Dadurch wird der mit der Ausgangsklemme 15 verbundene Motorschütz stromlos, während der mit der Ausgangsklemme 16 verbundene Motorschütz der Schützanordnung 2 zum Ansprechen gelangt. Somit kann erreicht werden, dass der Asynchronmotor 1 innerhalb des Drehzahlbereiches zwischen 950 und 1400 U/min in seiner 4poligen Konfiguration betrieben wird, was dem höchsten Drehzahlbereich entspricht.

Das Herunterregeln der Drehzahl in Abhängigkeit des in Fig. 1 schematisch gezeigten Sollwertgebers erfolgt analog, wobei jedoch wegen der Widerstände R4 bzw. R4' eine geringfügige Hysteresis vorhanden ist, mit welcher erreicht wird, dass der Abschaltvorgang der Schmitt-Trigger-Schaltungen 10 bzw. 11 bei geringfügig anderen Eingangsstromwerten $I_B$ stattfindet, so dass ein unerwünschtes Flattern der Schütze der Schützanordnung 2 vermieden ist. Die beiden Widerstände R4 bzw. R4' sind zweckmässigerweise derart eingestellt, dass anstelle einer Spannung von 1,7 V für den Einschaltvorgang der Schmitt-Trigger-Kreise 10 bzw. 11 eine Spannung von 1,62 V für die Abschaltung dieser Schmitt-Trigger-Schaltungen 10 bzw. 11 erforderlich ist, so dass die Schaltspannungen für den Ein- und Ausschaltvorgang sich um ± 2% unterscheiden. Beim Herunterfahren der Drehzahl finden somit die Umschaltvorgänge jeweils dann statt, wenn der Tachogenerator 5 eine Ausgangsspannung von 93,1 bzw. 44,1 V abgibt.

Fig. 3 zeigt schematisch die sich ergebende Energiebilanz. Bei einem 4poligen Drehstrom-Asynchronmotor kleinerer Leistung kann bei Nenndrehzahl ein Umsetzungswirkungsgrad von etwa 80% angenommen werden. Dies bedeutet, dass ein derartiger Asynchronmotor bei einer Ausgangsleistung von 4 kW bei 1400 U/min Gesamtverluste von etwa 1 kW aufweist, die sich aus etwa 285 W Schlupfleistung, 285 W Statorwicklungsverlusten und 430 W Eisen- sowie sonstigen Verlusten zusammensetzen. Wenn nun ein derartiger Asynchronmotor ohne Polumschaltung bei gleichbleibendem Drehmoment mit 28 U/min betrieben wird, steigen die Schlupfleistung und die Statorwicklungsverluste auf jeweils etwa 4,2 kW an, während die Eisen- und sonstigen Verluste ihren Wert von 430 V beibehalten. Dies bedeutet, dass bei 28 U/min nunmehr Gesamtverluste von 8,63 kW auftreten, was bei einer auf 80 W reduzierten Ausgangsleistung einen Gesamtwirkungsgrad von 0,92% ergibt. Da die bei 28 U/min auftretenden Verluste von 8,63 kW in Wärme umgesetzt werden, muss ein derartiger Asynchronmotor zwangsläufig sehr gross dimensioniert werden, was beim Einbau in vorhandene Maschinen aus statischen und dynamischen Gründen erhebliche Schwierigkeiten bereitet.

Wenn nun entsprechend Fig. 3 anstelle eines eintourigen Asynchronmotors ein 3fach polumschaltbarer Asynchronmotor verwendet wird, ergibt sich eine entsprechende Reduzierung der auftretenden Verluste, die jeweils im Schaltbereich einen maximalen Wert von 3,5 kW annehmen. Da diese Verluste im Vergleich zu den bei einem eintourigen Motor auftretenden Verlusten erheblich reduziert sind, ergibt sich eine entsprechende Verbesserung des Umsetzungswirkungsgrades bei gleichzeitiger Verringerung der thermischen Probleme des jeweiligen Antriebsmotors, so dass dieser kleiner dimensioniert werden kann.

Die jeweils nicht benötigten Wicklungen des polumschaltbaren Asynchronmotors 1 können als Bremswicklung verwendet werden, so dass ein Abbremsen bzw. rasches Herunterfahren der Drehzahl sehr wirksam durchgeführt werden kann, ohne dass dabei der Asynchronmotor 1 zusäztliche Wicklungen benötigt.

## Patentansprüche

1. Drehzahlgeregelter Maschinenantrieb, mit einem elektrischen Induktionsmotor (1) sowie einem mit Thyristoren bzw. Triac versehenen Phasenschnittregler (4), mit dem die Drehzahl der Welle des Induktionsmotors durch Phasenschnitt über einen weiten Drehzahlbereich hinweg steuer- bzw. regelbar ist, wobei der Induktionsmotor ein mit mehreren Wicklungen versehener polumschaltbarer Elektromotor ist, dessen Polumschaltung entsprechend der von ihm geforderten Drehzahl durchführbar ist, dadurch gekennzeichnet, dass die Umschaltung auf die verschiedenen Polzahlen abhängig vom Erreichen festgelegter Grenzwerte der gemessenen Motordrehzahl erfolgt, derart, dass eine die Polumschaltung bewirkende Schützanordnung (2) von einer mehrere gleich aufgebaute parallele Zweige aufweisenden Steuerschaltung (3) ansteuerbar ist, die im wesentlichen aus einem der Einstellung bestimmter Spannungswerte dienenden Spannungsteiler (R1 bis R3), einzelnen Schmitt-Trigger-Schaltungen (10, 11), nachgeschalteten Verstärkerkreisen (T3, T3') sowie von diesen beeinflussten Relais (Re.1, Rel.2) zum Ansteuern der einzelnen Schütze der Schützanordnung (2) besteht.

2. Maschinenantrieb nach Anspruch 1, dadurch gekennzeichnet, dass den einzelnen Schmitt-Trigger-Schaltungen (10, 11) einstellbare Widerstände (R4, R4') vorgeschaltet sind, die der Einstellung der Schalthysterese beim Hinauf- und Herunterfahren der Drehzahl des polumschaltbaren Induktionsmotors (1) dienen.

3. Maschinenantrieb nach Anspruch 1 oder 2, dadurch gekennzeichnet, dass der polumschaltbare Induktionsmotor ein Asynchronmotor (1) in ein- oder dreiphasiger Auslegung ist, der aufgrund von Polumschaltung wenigstens drei unterschiedliche Grunddrehzahlen aufweiset.

4. Maschinenantrieb nach einem der Ansprüche 1 bis 3, dadurch gekennzeichnet, dass der Phasenschnittregler (4) mit einem vom Induktionsmotor (1) angetriebenen Tachogenerator (5) verbunden ist, dessen Ausgangssignal der Steuerschaltung (3) zugeführt ist.

5. Maschinenantrieb nach einem der Ansprüche 1 bis 4, dadurch gekennzeichnet, dass die innerhalb eines vorgegebenen Drehzahlbereichs jeweils nicht benötigte Wicklung des polumschaltbaren Induktionsmotors im Hinblick auf eine möglichst rasche Reduzierung der Drehzahl als Bremswicklung verwendbar ist.

## Claims

1. A Speed-regulated motor drive comprising an electrical induction motor (1) and a phase cut regulator (4) provided with thyristors or, as the case may be, triac(s), with which the speed of the shaft of the induction motor can be controlled and/or regulated by means of phase cut over a wide range of speeds, wherein the induction motor is a pole-changing electrical motor provided with several windings with which pole changing can be carried out in dependence on the required speed, characterised in that changeover switching between the various poles takes place in dependence on the attainment of fixed limit values of the measured motor speed in such a way that an array of contactors (2) for effecting pole changing are controlled by a control circuit (3) having several similar branches in parallel, the control circuit comprising a voltage divider (R1-R3) serving to set specified voltage values, individual Schmitt trigger circuits (10, 11), amplifier circuits (T3, T3') coupled to the output, and relays (Rel.1, Rel.2) which are actuated by the amplifier circuits to control the individual contactors of the contactor array (2).

2. A motor drive according to claim 1, characterised in that the individual Schmitt trigger circuits (10, 11) have adjustable resistances (R4, R4') connected in series ahead of them, which serve to set the switching hystereses when the speed of the pole-changing induction motor (1) increases and decreases.

3. A motor drive according to claim 1 or 2, characterised in that the pole-changing induction motor is an asynchronous motor (1) in single- or three-phase configuration which has at least three distinct fundamental speeds on the basis of pole-changing.

4. A motor drive according to any one of claims 1 to 3, characterised in that the phase cut regulator (4) is connected to a tacho-generator (5) driven by the induction motor (1), whose output signal is supplied to the control circuit (3).

5. A motor drive according to any one of claims 1 to 4, characterised in that the winding of the pole-changing induction motor which is not required within a prescribed speed range at any given time is capable of being used as a brake winding for reducing speed as rapidly as possible.


**Revendications**

1. Entraînement moteur à réglage de vitesse, comportant un moteur électrique à induction (1) ainsi qu'un régulateur par modification de l'angle d'amorçage (4) comprenant un thyristor ou un triac (thyristor bidirectionnel) avec lequel on peut commander et réguler sur une large plage de vitesse de rotation la vitesse de rotation de l'arbre du moteur à induction par modification de l'angle d'amorçage, étant précisé que le moteur à induction est un moteur électrique à commutation de pôles qui comprend plusieurs bobinages et dont la commutation des pôles peut s'effectuer en fonction de la vitesse de rotation qui lui est demandée, caractérisé en ce que la commutation sur les différents nombres de pôles se fait en fonction du fait que l'on a atteint des valeurs limites déterminées de la vitesse de rotation mesurée du moteur, de façon telle qu'un dispositif de contacteurs (2), qui opère la commutation des pôles, peut être commandé par un circuit de commande (3) qui présente plusieurs branches parallèles de même composition et qui est essentiellement constitué d'un diviseur de tension (R1-R3) qui sert à inscrire des valeurs déterminées de la tension, de différents circuits à bascule de Schmitt (10, 11), de circuits amplificateurs montés en aval (T3, T3') ainsi que de relais (Rel.1, Rel.2) influencés par ces circuits pour commander les différents contacteurs du dispositif de contacteurs (2).

2. Entraînement moteur selon la revendication 1, caractérisé en ce qu'en amont des différents circuits à bascule de Schmitt (10, 11) sont montées des résistances variables (R4, R4') qui servent à définir l'hystérésis du circuit lors du changement, par valeur croissante et par valeur décroissante, de la vitesse de rotation du moteur à induction à commutation de pôles (1).

3. Entraînement moteur selon la revendication 1 ou 2, caractérisé en ce que le moteur à induction à commutation de pôles est un moteur asynchrone (1) de conception monophasée ou triphasée qui présente, du fait de la commutation de pôles, au moins trois vitesses de rotation de base différentes.

4. Entraînement moteur selon l'une des revendications 1 à 3, caractérisé en ce que le régulateur par modification de l'angle d'amorçage (4) est relié à une génératrice tachymétrique (5) qui est entraînée par le moteur à induction (1) et dont on amène le signal de sortie au circuit de commande (3).

5. Entraînement moteur selon l'une des revendications 1 à 4, caractérisé en ce que le bobinage, qui n'est respectivement pas nécessaire à l'intérieur d'une plage donnée de vitesse de rotation, du moteur à induction à commutation de pôles peut s'employer comme bobinage de freinage en vue d'une réduction la plus rapide possible de la vitesse de rotation.

Fig.1

Fig.3

Fig.2